(19) Europäisches Patentamt
European Patent Office
Office européen des brevets

(11) **EP 1 801 747 A1**

(12) **DEMANDE DE BREVET EUROPEEN**

(43) Date de publication:
**27.06.2007 Bulletin 2007/26**

(51) Int Cl.:
***G06Q 10/00*** *(2006.01)*

(21) Numéro de dépôt: **06291999.8**

(22) Date de dépôt: **20.12.2006**

(84) Etats contractants désignés:
**AT BE BG CH CY CZ DE DK EE ES FI FR GB GR
HU IE IS IT LI LT LU LV MC NL PL PT RO SE SI
SK TR**
Etats d'extension désignés:
**AL BA HR MK YU**

(30) Priorité: **22.12.2005 FR 0513160**

(71) Demandeur: **France Telecom
75015 Paris (FR)**

(72) Inventeur: **Herledan, Frédéric
38240 Meylan (FR)**

(74) Mandataire: **Cabinet Plasseraud
52 rue de la Victoire
75440 Paris Cedex 09 (FR)**

(54) **Gestion de prises de rendez-vous requérant une pluralité de ressources**

(57) L'invention concerne la gestion de prises de rendez-vous. On prévoit :

a) une étape initiale de construction de requêtes type prédéterminées en associant à chaque requête type un jeu de ressources approprié,

b) une étape courante de gestion d'une requête entrante comportant des informations pour identifier une requête type parmi les requêtes type prédéterminées et une date et/ou un horaire de rendez-vous souhaités.

En particulier dans cette étape b), par comparaison de la requête entrante avec les requêtes type, on identifie un jeu de ressources requises à associer à la requête entrante et on décide, en fonction de données de disponibilités des ressources requises, de satisfaire ou non la requête entrante.

**Description**

La présente invention concerne une gestion automatisée de prises de rendez-vous.

Dans le document FR-2 851 834, il a été proposé une prise de rendez-vous automatisée, grâce à une accessibilité contrôlée d'un fichier d'agenda d'une entité fournisseur, au profit d'entités clientes. Cette solution s'est avérée très efficace pour la prise de rendez-vous automatisée auprès d'une entité fournisseur, en particulier lorsqu'elle n'implique qu'un seul type de service qui nécessite une ressource unique, par exemple le service d'un professionnel de santé seul en cabinet et prodiguant le même type de soins à ses patients.

Il s'est posé néanmoins le problème d'une gestion, toujours automatique, de rendez-vous pour différents types de services, nécessitant différents types de ressources. Par exemple, un cabinet de radiologie peut offrir différents types de prestations nécessitant respectivement plusieurs ressources humaines (radiologues, manipulateurs) et/ou matérielles (appareil à rayons X, scanner, liquides révélateurs, etc.). Dans ce cas, certaines ressources peuvent être disponibles pour assurer une prestation donnée alors que d'autres ressources, nécessaires pour cette même prestation, sont indisponibles. Il a été souhaité alors une gestion efficace des prises de rendez-vous lorsque plusieurs ressources étaient requises pour une même prestation, cette gestion pouvant être :

- mise en oeuvre par des moyens informatiques pour assister une personne pour la prise de rendez-vous,
- ou totalement automatisée depuis l'acquisition d'une requête de rendez-vous jusqu'à la délivrance d'une date de rendez-vous.

La présente invention vient améliorer la situation.

A cet effet, elle propose tout d'abord un procédé mis donc en oeuvre par des moyens informatiques, pour la gestion de requêtes de prises de rendez-vous pour des services requérant des ressources parmi un ensemble fini de ressources.

Le procédé au sens de l'invention comporte les étapes de :

- réception et interprétation d'une requête entrante,
- identification :

  * d'une requête type correspondant à une requête entrante, parmi une pluralité de requêtes type prédéterminées,
  * et d'un jeu de ressources, parmi ledit ensemble fini de ressources, associé à la requête type correspondant à ladite requête entrante,

- et décision, en fonction de données de disponibilités temporelles des ressources dudit jeu de ressources, de satisfaire ou non ladite requête entrante.

La présente invention prévoit aussi un dispositif informatique pour la mise en oeuvre d'un tel procédé.

En prévoyant une multiplicité de requêtes type prédéterminées, on assure, selon l'un des avantages que procure l'invention, une automatisation complète de la prise de rendez-vous, dès lors qu'une multiplicité de requêtes type sont prévues pour autant de prestations possibles pour un rendez-vous.

Après avoir identifié une requête type et un jeu de ressources associé, le moteur de traitement des requêtes entrantes est apte à déterminer s'il est possible de satisfaire la requête entrante. Ainsi, la définition préalable de requêtes types et de jeux de ressources associés permet la prise en compte de règles métier lors du traitement des requêtes entrantes.

En outre, le moteur de traitement des requêtes entrantes peut être rendu indépendant des règles métier et du domaine métier auquel s'applique l'invention, puisque les données définissant les requêtes types et jeux de ressources associés en constituent de simples données d'entrée. Au moyen d'un moteur de traitement unique, apte à utiliser de telles données d'entrée, il est donc possible de mettre en oeuvre une multiplicité de systèmes de gestion de prise de rendez-vous, chacun de ces systèmes étant adapté à un métier et à des règles propres à ce métier. Il en résulte des coûts de développement réduits.

Avantageusement, chaque requête entrante comporte :

- des informations organisationnelles permettant d'identifier une requête type parmi les requêtes type prédéterminées,
- et des informations temporelles relatives à une date et/ou un horaire de rendez-vous souhaités.

Les informations organisationnelles sont propres à des prestations à assurer au cours d'un rendez-vous requis. On comprendra ainsi que ces informations organisationnelles permettent avantageusement d'identifier une requête type à associer à la requête entrante.

D'ailleurs, la présente invention vise aussi un procédé comportant une étape de construction et/ou de mise à jour des requêtes type prédéterminées, en renseignant chacune desdites requêtes type prédéterminées en fonction d'informations organisationnelles propres à des prestations à assurer pour satisfaire la requête type.

Ces informations organisationnelles peuvent donc avantageusement être définies par un utilisateur selon ses propres règles métier.

A ce titre la présente invention vise aussi un dispositif informatique comportant :

- un moteur de construction des requêtes type,
- une interface homme-machine pour construire et/ou mettre à jour lesdites requêtes type prédéterminées en entrant des informations organisationnelles propres à chaque requête type,

- et une mémoire propre à stocker lesdites requêtes type prédéterminées.

Avantageusement, un tel moteur de construction des requêtes type est générique et indépendant des règles métier de l'utilisateur.

Dans un exemple de réalisation, l'étape initiale de construction peut alors consister, pour un utilisateur, à renseigner manuellement une table de correspondance pour chaque requête type, selon un canevas prédéfini. Un exemple de canevas qui sera décrit en détail plus loin peut correspondre à une table de correspondance qui implique toutes les ressources de l'ensemble fini de ressources, précité. L'opérateur peut renseigner alors chaque "case" de cette table de correspondance en indiquant notamment le caractère essentiel ou non essentiel de chaque ressource pour une requête type donnée, en fonction de règles métier habituelles.

L'étape courante du procédé au sens de l'invention, visant la décision de satisfaire ou non une requête entrante, peut être menée ensuite en interprétant une requête entrante valablement formulée, c'est-à-dire suffisamment exhaustive pour lui faire correspondre une requête type préenregistrée et sa table de correspondance associée. Dès lors qu'une table de correspondance a pu être associée à une requête entrante comportant, en principe, une indication de date de rendez-vous souhaitée, il est possible de vérifier à partir des données de disponibilité des ressources, si par exemple une ressource essentielle pour la prestation à assurer pendant le rendez-vous est indisponible pour toute la durée du rendez-vous, auquel cas il ne peut être donné satisfaction à la requête entrante pour cette date de rendez-vous.

Typiquement, plusieurs ressources peuvent être utilisées pour effectuer une même opération d'une prestation globale à réaliser pendant le rendez-vous, ou encore, une ressource peut intervenir à des instants différents pendant le rendez-vous sans incidence sur la qualité de la prestation. Il est ainsi avantageux d'appliquer une fonction booléenne aux données précitées de disponibilités temporelles des ressources. Le résultat de cette fonction booléenne détermine la décision de satisfaire ou non la requête entrante.

Par ailleurs, selon un autre avantage que procure cette réalisation, l'interchangeabilité des ressources et/ou des plages temporelles dans lesquelles les ressources peuvent intervenir confère une grande souplesse dans la prise de rendez-vous.

D'autres caractéristiques et avantages de l'invention apparaîtront à l'examen de la description détaillée ci-après, et des dessins annexés sur lesquels :

- la figure 1 illustre schématiquement un serveur comportant un dispositif informatique pour la mise en oeuvre de l'invention, dans un mode de réalisation préféré,
- la figure 2 illustre schématiquement les opérations nécessaires pour effectuer un service correspondant à une requête type,
- la figure 3 illustre une table de correspondance,
- la figure 4 illustre une table de disponibilité construite à partir du fichier AGENDA représenté sur la figure 1, et
- la figure 5 illustre schématiquement les opérations d'une étape b) d'un procédé au sens de l'invention, selon un exemple de réalisation.

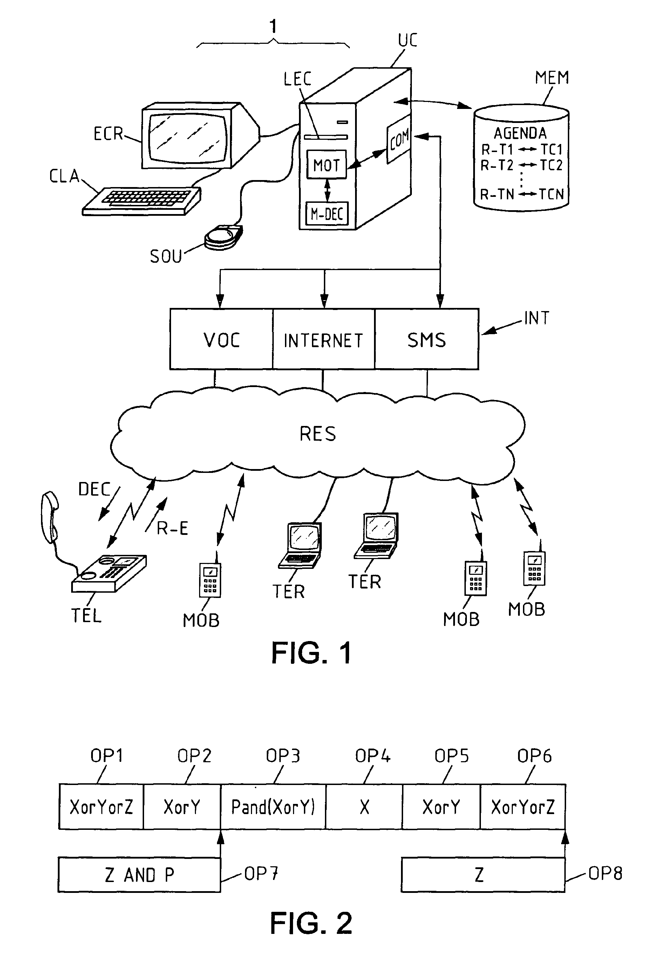

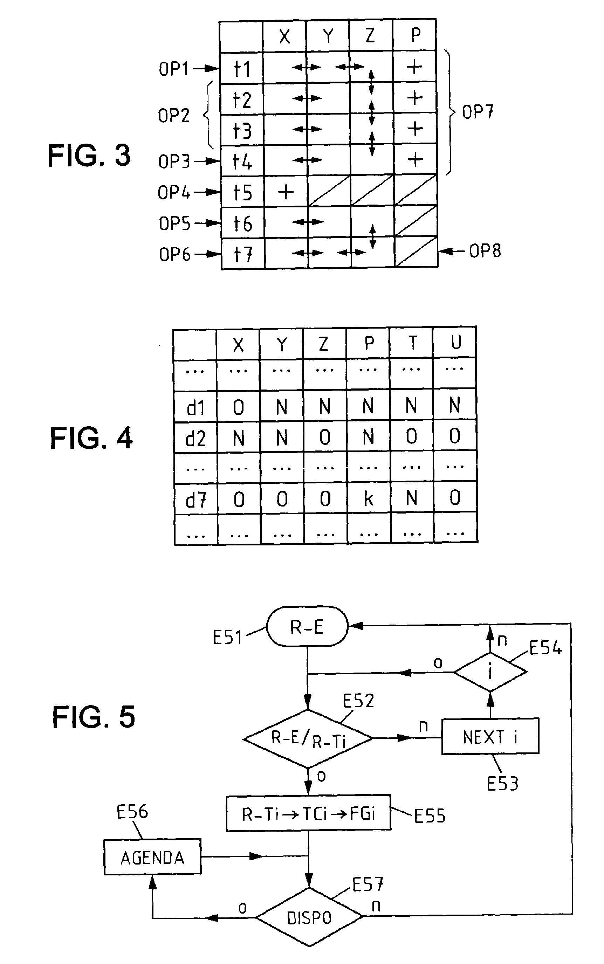

En référence à la figure 1, dans un exemple de réalisation selon lequel l'invention est mise en oeuvre par un serveur de gestion de requêtes de prises de rendez-vous, le serveur, que vise d'ailleurs la présente invention, comporte :

- une interface INT propre à recevoir et interpréter une requête entrante (flèche R-E),
- un dispositif informatique 1 pour exécuter le procédé au sens de l'invention, et
- une interface propre à retourner une information de décision de satisfaire ou non la requête entrante (flèche DEC).

Cette dernière interface peut être identique à l'interface INT de réception des requêtes entrantes. Elle peut comporter par exemple un répondeur interactif VOC pour recevoir des appels téléphoniques TEL, MOB issus du réseau téléphonique commuté ou d'un réseau mobile (par exemple GSM). Le menu du répondeur interactif est suffisamment exhaustif pour associer ensuite une requête type R-Ti (avec i compris entre 1 et N) à la requête entrante R-E.

Il peut alors être prévu de collecter, dans l'interaction entre le répondeur et la personne souhaitant prendre rendez-vous, des informations organisationnelles (par exemple des mots-clés tels que "remplacement", "pare-brise", ou autre) permettant d'associer une requête type aux informations organisationnelles que comporte la requête entrante. Ces informations peuvent être par exemple collectées par reconnaissance de mots-clés dans les phrases prononcées (reconnaissance de parole) ou en faisant suivre à la personne un menu contextuel détaillé. Par comparaison avec des requêtes type préenregistrées, ces mots-clés, lorsqu'ils sont présents dans une requête type préexistante, permettent alors d'identifier les ressources qui sont nécessaires pour satisfaire cette requête préexistante et, de là, assurer le service pour lequel un rendez-vous est requis, comme on le verra plus loin en référence notamment à la figure 3.

Une autre information, relative en revanche à un horaire ou une date de rendez-vous souhaitée par la personne, peut aussi être collectée par reconnaissance de parole ou à travers un menu contextuel détaillé. Cette information temporelle (par exemple "lundi 19 décembre", "de 10 heures à midi", ou autre) n'est pas utilisée en tant que telle pour identifier une requête type, mais plutôt pour vérifier la disponibilité des ressources nécessaires pour le service requis, comme on le verra plus loin en référence à la figure 4.

L'interface INT peut comporter en outre un accès à un réseau étendu (par exemple le réseau Internet). En particulier, il peut être prévu d'animer un site Internet pour que des utilisateurs de terminaux distants TER (ordinateurs ou autres) puissent formuler en ligne des requêtes entrantes, comme décrit dans FR-2 851 834, en remplissant un formulaire numérique et/ou en proposant par exemple un dialogue via plusieurs pages HTML.
L'interface INT peut comporter en outre un module de réception et d'interprétation de messages SMS comportant des requêtes entrantes formulées par des mobiles MOB.

De manière générale, on comprendra que l'interface INT peut accéder à un ou plusieurs réseaux RES, le cas échant via une ou plusieurs passerelles entre ces réseaux, pour communiquer avec différents types de terminaux. Comme indiqué ci-avant, l'interface de réception des requêtes entrantes et l'interface d'émission des décisions de satisfaire ou non les requêtes entrantes peuvent être identiques. Toutefois, le moyen pour recevoir et interpréter une requête entrante et le moyen pour transmettre la décision de la satisfaire ou non peuvent être différents. Par exemple, un répondeur interactif peut recevoir une requête entrante tandis que la décision de satisfaire ou non cette requête peut être communiquée dans un message SMS ou par courrier électronique.

Le dispositif informatique 1 assure lui-même la gestion de requêtes de prises de rendez-vous pour des services qui requièrent des ressources parmi un ensemble fini de ressources. Le dispositif comporte :

- une interface de communication COM propre à recevoir et interpréter les données d'une requête entrante,
- un moteur de recherche MOT, par exemple stocké dans une unité centrale UC, pour identifier :

  - une requête type R-Ti correspondant à une requête entrante R-E, parmi une pluralité de requêtes type prédéterminées R-T1, R-T2, ..., R-TN,
  - et, dans une table de correspondance TCi associée à cette requête type, un jeu de ressources à affecter pour la requête entrante,

- une mémoire de stockage MEM de données de disponibilités temporelles des ressources portant la référence AGENDA sur la figure 1.

La mémoire de stockage MEM peut stocker en outre les différentes requêtes type R-Ti en tant qu'identifiants des tables de correspondances TCi associées. Le moteur de recherche peut alors accéder à cette mémoire MEM pour attribuer la table de correspondance appropriée à la requête entrante.

Le dispositif informatique 1 comporte en outre un module de décision M-DEC capable de coopérer avec la mémoire de stockage MEM pour décider, en fonction des données AGENDA de disponibilité des ressources à affecter pour effectuer le service correspondant à la requête entrante, de satisfaire ou non cette requête entrante R-E.

Le moteur de recherche MOT et le module de décision M-DEC peuvent utiliser des composants tels qu'un processeur et de la mémoire vive de l'unité centrale UC et être stockés dans un support mémoire tel qu'un disque dur, un disque CD-ROM ou autre. La mémoire MEM peut, elle-même, être incluse dans l'unité centrale UC ou non.

Le dispositif informatique 1 peut comporter en outre une interface homme/machine incluant des moyens de visualisation tels qu'un écran ECR et des moyens de saisie tels qu'un clavier CLA et/ou une souris SOU. Cette interface homme/machine peut être à disposition d'un opérateur pour construire et/ou mettre à jour manuellement les requêtes type prédéterminées et les tables de correspondance associées. En complément ou en variante, des requêtes type préenregistrées peuvent être lues à partir d'un disque (disque optique ou magnétique, CD-ROM, téléchargeables sur réseau ou autre) coopérant avec un lecteur LEC de l'unité centrale.

On décrit maintenant, en référence à la figure 2, la construction d'une requête type en s'appuyant sur un exemple simple de réparation d'un véhicule auprès d'un garage automobile, cette réparation nécessitant le démontage et le remplacement d'une pièce, puis le montage d'une nouvelle pièce.
Ce service requiert des ressources X, Y, Z ou P parmi un ensemble fini de ressources matérielles (pièces de rechange, pont dans un atelier de réparation, outils, etc.) et humaines (personnel administratif et d'accueil, techniciens, apprentis, etc.).

Un tel service nécessite par exemple les ressources suivantes :

- un mécanicien qualifié X seul habilité à tester la nouvelle pièce installée (opération OP4 de la figure 2),
- un mécanicien apprenti Y capable de démonter la pièce à échanger (opération OP2) ou remonter la nouvelle pièce (opération OP5),
- la pièce nouvelle P à installer (opération OP3),
- un personnel administratif Z dédié notamment à la commande et à la recherche de la pièce P dans un entrepôt (opération OP7), à l'édition d'une facture pour le service effectué (opération OP8), ou encore à l'acheminement du véhicule dans l'atelier de réparation (opération OP1) ou à sa sortie de l'atelier de réparation (opération OP6).

Le service peut alors se décomposer selon la succession d'opérations ci-après.
L'acheminement du véhicule dans l'atelier de réparation OP1 peut être effectué par le mécanicien qualifié X ou son apprenti Y, ou encore simplement par le personnel administratif Z.

Le démontage de la pièce à remplacer OP2 peut être effectué par le mécanicien qualifié X ou son apprenti Y. Pendant ces deux opérations OP1 et OP2, le personnel administratif Z peut aller rechercher la pièce P dans un entrepôt pendant une opération OP7 qui peut être menée à un moment de l'opération OP1 si les ressources X ou Y se chargent de l'opération OP1, ou encore à un moment de l'opération OP2 pendant laquelle la ressource Z n'intervient pas.

Une opération subséquente OP3 consiste à monter la pièce P (nécessaire pour cette opération) et peut être réalisée par le mécanicien qualifié X ou son apprenti Y. Seul le mécanicien qualifié X peut tester la nouvelle pièce P, une fois montée, pendant l'opération OP4. La disponibilité de la ressource X est alors nécessaire. Ensuite, la fixation de la nouvelle pièce P peut être assurée par le mécanicien qualifié X ou son apprenti Y, pendant l'opération OP5.

Parallèlement, si aucun problème de fonctionnement n'est constaté au test de l'opération OP4, le personnel administratif Z peut commencer à éditer la facture de la réparation (opération OP8). Cette opération OP8 peut être effectuée ultérieurement et, en tout état de cause, préférentiellement à la sortie du véhicule de l'atelier (opération OP6).

Typiquement, l'opération OP6 peut être réalisée par l'une des ressources X, Y ou Z. Néanmoins, si la ressource Z est requise par l'opération OP8 au moment où l'opération OP6 doit être menée, la ressource X ou la ressource Y sera plutôt sollicitée pour l'opération OP6.

On comprendra alors qu'il est avantageux de construire chaque requête type associée à un service en découpant ce service en plusieurs opérations à réaliser, ces opérations pouvant être successives ou menées en parallèle comme les opérations OP7 et OP8 illustrées sur la figure 2.

On associe alors à chaque requête type :

- une pluralité d'opérations s'étendant chacune sur une ou plusieurs plages temporelles successives, d'une part, et,
- au moins les ressources d'un jeu de ressources susceptibles de satisfaire la requête type, d'autre part.

On construit ainsi une table de correspondance associée à la requête type, chaque case de la table de correspondance comportant, en référence à la figure 3 :

- une valeur d'essentialité (signe "+") d'une ressource sur une plage temporelle, ou
- une valeur de non-essentialité (barre oblique) d'une ressource sur une plage temporelle,
- ou encore une valeur résultant d'une combinaison logique relative à une interchangeabilité de plusieurs ressources sur une même plage temporelle (double flèche horizontale dans l'exemple de la figure 3) et/ou relative à une interchangeabilité de plusieurs plages temporelles pour une même ressource (double flèche verticale dans l'exemple de la figure 3).

De façon avantageuse, le fait de prévoir un caractère d'essentialité, intermédiaire entre une valeur d'essentialité et une valeur de non-essentialité, par le biais d'une combinaison logique relative à une interchangeabilité, confère une grande souplesse dans l'organisation des ressources pour satisfaire un rendez-vous.

Typiquement, une interchangeabilité entre plusieurs ressources pour une même plage temporelle signifie qu'une opération peut être réalisée indifféremment par plusieurs ressources distinctes. Ainsi, si l'une de ces ressources est indisponible, elle peut être remplacée par une autre ressource.

De même, une interchangeabilité entre plusieurs plages temporelles pour une même ressource signifie qu'une opération peut être réalisée par une même ressource à une plage temporelle donnée ou à une autre plage temporelle, ultérieure. Ainsi, si cette ressource est indisponible sur la plage temporelle donnée, elle pourra intervenir ultérieurement pour réaliser une opération requise dans le cadre d'une prestation globale demandée.

Comme on le verra plus loin en détail, on prévoit avantageusement une fonction booléenne pour formaliser ces critères. Typiquement, cette fonction booléenne lie les ressources interchangeables ou les plages temporelles interchangeables par l'opérateur logique « OU », tandis que les opérations successives sont enchaînées par l'opérateur logique « ET ». Le fait de formaliser chaque requête type par une fonction booléenne distincte permet de gérer automatiquement, par des moyens informatiques, toute une palette de prestations possibles.

On se réfère maintenant à la figure 3. La table de correspondance comporte une succession de plages temporelles t1 à t7 en colonnes, et une succession de ressources nécessaires (signe "+") ou non (barre oblique) en lignes, notées encore X, Y, Z et P. Les doubles flèches horizontales à cheval sur deux cases de la table signifient que l'une ou l'autre des deux ressources correspondant à ces deux cases peuvent réaliser une opération sur une plage temporelle donnée. Les doubles flèches verticales à cheval sur deux cases associées à une même ressource signifient que cette ressource doit être disponible pendant l'une ou l'autre des deux plages temporelles correspondant à ces deux cases.

La table de correspondance de la figure 3 est conforme à la requête type illustrée sur la figure 2.

Il a été choisi dans l'exemple représenté de considérer la pièce P comme essentielle (signe "+") depuis la plage t1 jusqu'à la plage t4, alors qu'elle n'est réellement nécessaire qu'à la plage t4. Cette mesure permet avantageusement à la ressource Z de rechercher la pièce P à tout moment des plages t1 à t4 et, par exemple, d'être disponible pour un autre service que la recherche de la pièce P pendant la plage t4. Bien entendu, la table de correspondance peut être renseignée autrement, par exemple en déclarant les ressources P et Z comme non nécessaires pour l'opération OP7 sur les plages t1 à t3 et comme nécessaires pour cette opération OP7 sur la plage t4. Dans cette variante, la ressource Z est alors déclarée comme essentielle (signe "+") sur la plage t4.

On comprendra de manière générale que chaque requête type définit non seulement le service global à assurer pour un rendez-vous, mais aussi des préférences optionnelles quant au déroulement de ce service. Dans l'exemple de la figure 3, la requête entrante ne spécifie pas de préférence quant à la ressource souhaitée X ou Y pour l'exécution des opérations OP2, OP3 et OP5. Dans un autre exemple où la personne prenant rendez-vous formule au contraire une option quant à la réalisation de ces opérations par un technicien qualifié X, une autre requête type possible précise le caractère essentiel de la ressource X pour le déroulement de ces opérations OP2, OP3 et OP5 et sa table de correspondance comporte un signe "+" aux cases (t2, X), (t3, X), (t4, X) et (t6, X) et une barre oblique (caractère non essentiel de la ressource Y) aux cases (t2, Y), (t3, Y), (t4, Y) et (t6, Y). Ainsi, dans une réalisation préférentielle, on prévoit autant de requêtes type pour un service donné (et autant de tables de correspondance respectives) que d'options possibles pour réaliser ce service.

Par ailleurs, dans l'exemple représenté sur la figure 3, les interchangeabilités possibles entre ressources ou entre plages temporelles (représentées par des doubles flèches) concernent des cases adjacentes de la table de correspondance. Bien entendu, par exemple pour illustrer le fait qu'une même ressource A puisse intervenir à deux instants possibles correspondant à deux plages temporelles disjointes ti et tj (avec $i \neq j \pm 1$), il peut être prévu simplement de relier deux cases disjointes ((ti, A) et (tj, A)) par une double flèche verticale sur une table de correspondance au sens de la figure 3.

On notera aussi que chaque opération de la figure 3 peut s'étendre sur une ou plusieurs plages. Par exemple, l'opération OP2 de démontage de l'ancienne pièce peut nécessiter deux quanta temporels t2 et t3 tandis que l'acheminement du véhicule vers l'atelier n'occupe qu'un quantum temporel t1. Cette mesure permet avantageusement de prévoir plusieurs plages temporelles successives possibles pour mener d'autres opérations en parallèle. Par exemple, l'opération OP7 de recherche de la pièce P dans un entrepôt peut être effectuée pendant la plage t2 ou la plage t3, ce qui permet de réserver la ressource Z à d'autres tâches respectivement pendant la plage t3 ou la plage t2.

Le contenu de la table de correspondance de la figure 3 peut être traduit ensuite en logique booléenne. Par exemple, la double flèche horizontale à cheval sur les cases (t1,X) et (t1,Y) peut être traduite par une fonction booléenne du type :

$$(t1 \text{ ET } X) \text{ OU } (t1 \text{ ET } Y)$$

Cette notation de double flèche horizontale entre les cases (t1,X) et (t1,Y) signifie alors qu'il faut attribuer à ces cases (t1,X) et (t1,Y) la même fonction (t1 ET X) OU (t1 ET Y).

Dans un autre exemple, la double flèche verticale à cheval sur les cases (t1,Z) et (t2,Z) peut être traduite en logique booléenne par une fonction du type :

$$(t1 \text{ ET } Z) \text{ OU } (t2 \text{ ET } Z)$$

Cette notation de double flèche verticale entre les cases (t1,Z) et (t2,Z) signifie alors qu'il faut attribuer à ces cases (t1,Z) et (t2,Z) la même fonction (t1 ET Z) OU (t2 ET Z).

En des termes plus généraux, la combinaison logique précitée fait intervenir:

- des couples comportant chacun une plage temporelle et une ressource,
- un opérateur logique de type "ET" entre la plage temporelle et la ressource de chaque couple, et
- un opérateur logique de type "OU" entre les couples.

Ainsi, pour l'opération OP1, une fonction booléenne peut être alors construite ainsi : (t1 ET X) OU (t1 ET Y) OU (t1 ET Z)

Pour l'opération OP7, une autre fonction booléenne peut être construite ainsi :

[(t1 ET Z) OU (t2 ET Z) OU (t3 et Z) OU (t4 ET Z)] ET
[(t1 ET P) ET (t2 ET P) ET (t3 et P) ET (t4 ET P)]

Pour l'opération OP2, une autre fonction peut être construite ainsi :

[(t2 ET X) OU (t2 ET Y)] ET [(t3 ET X) OU (t3 ET Y)]

Au total, une fonction booléenne globale regroupant par l'opérateur "ET" les fonctions booléennes précités pour toutes les opérations OP1 à OP8 peut être construite, simplement grâce aux indications fournies dans la table de correspondance.

La réalisation présentée ci-avant d'une "*table de correspondance*" a été choisie ici à titre illustratif. Il s'est avéré néanmoins que cette présentation était avantageuse pour un opérateur construisant ou mettant à jour les requêtes types en renseignant alors des tableaux du type de celui représenté sur la figure 3. Bien entendu, des présentations variantes d'une table de correspondance (par exemple un arbre de décision représentant des étapes d'opérations OP1 à OP8) sont tout aussi envisageables. En pratique, on prévoit toutefois un programme d'ordinateur capable d'interpréter une telle table de correspondance (ou une représentation équivalente) et de construire une fonction booléenne globale correspondant à cette table, comme décrit ci-avant. On comprendra alors que les fonctionnalités d'une table de correspondance, ou d'une représentation équivalente, et d'une fonction booléenne globale associée sont équivalentes dans le contexte de l'invention.

On décrit ci-après, en référence à la figure 4, la structure d'un fichier AGENDA comportant les données de disponibilités temporelles des ressources.

Le fichier AGENDA est organisé en une succession de dates d1,..., d7 définissant des plages temporelles du type précité, d'une part, et en une succession de ressources de l'ensemble global des ressources X,Y,...,U, d'autre part. On notera en effet que d'autres ressources T, U peuvent être répertoriées dans ce fichier alors qu'elles n'intervenaient pas dans le service dont la table de correspondance est illustrée sur la figure 3. On a choisi alors, dans un exemple de réalisation, d'ignorer ces ressources T et U pour la construction de la table de la figure 3. En variante, il peut être prévu de les répertorier dans la table de correspondance en leur affectant un caractère "non essentiel" (barre oblique) pour toutes les plages temporelles t1 à t7.

On forme avec la structure du fichier AGENDA une table de disponibilité dont chaque case comporte une valeur d'état "libre" (noté O sur la figure 4) ou "préempté" (noté N sur la figure 4) d'une ressource donnée sur une plage temporelle donnée.

Toutefois, dans une réalisation avantageuse, plusieurs ressources matérielles identiques (telles que *k* exemplaires de la pièce P dans l'exemple de la figure 4) peuvent être identifiées dans une même colonne de la table de disponibilité et leur disponibilité n'est pas indiquée par un signe "O" mais par une valeur numérique *k* (comme illustré dans la case (d7, P) de la figure 4) signifiant ainsi qu'à une date (d7), *k* exemplaires de la pièce P seront disponibles. Si l'un de ces exemplaires est préempté suite à une prise de rendez-vous accordée, la valeur *k* est décrémentée d'une unité par exemple et la valeur *k* devient *k*-1 dans la table de la figure 4.

En revanche, pour ce qui concerne des ressources humaines, même si ces ressources sont interchangeables pour leurs compétences, il peut être préféré de prévoir une colonne par ressource dans la table de disponibilité de la figure 4 et, en revanche, de ne prévoir qu'une colonne unique relative à ces ressources interchangeables dans la table de correspondance de la figure 3. Cette mesure permet avantageusement un suivi des absences de telles ressources, notamment, dans la table de la figure 4.

En référence à la figure 5, on suit maintenant les étapes faisant suite à la réception d'une requête entrante R-E (étape E51), dans un exemple de réalisation.

On compare la requête entrante R-E aux requêtes types préenregistrées R-Ti dans la mémoire MEM (test E52). Tant qu'aucune correspondance de la requête entrante n'a été trouvée avec une requête type R-Ti, on passe à une requête type suivante R-T(i+1) (étape E53 et flèche o en sortie du test E54). Si aucune requête type ne correspond à la requête entrante (flèche n en sortie du test sur la valeur i, portant la référence E54), il peut être prévu de demander à reformuler une nouvelle requête entrante (retour à l'étape E51).

Si une requête type R-Ti correspond à la requête entrante (flèche o en sortie du test E52), on cherche dans la mémoire MEM la table de correspondance TCi de cette requête type (ou sa fonction booléenne globale associée FGi comme indiqué précédemment) pour l'appliquer aux données du fichier AGENDA (E56) comme suit.

On compare (test E57) les cases de la table de correspondance (telle que représentée sur la figure 3 par exemple) aux cases de la table de disponibilité (telle que représentée sur la figure 4 par exemple), une à une pour une même ressource et une même plage temporelle.

Typiquement, la requête entrante ne peut pas être satisfaite si la table de correspondance comporte au moins une case présentant une ressource comme essentielle alors que la table de disponibilité comporte une case homologue présentant cette ressource comme indisponible. Tel est le cas en l'espèce dans l'exemple représenté sur la figure 4, dans la case (d1,P) de la table de disponibilité faisant apparaître la pièce P comme indisponible alors qu'elle est essentielle selon la case homologue (t1,P) du tableau de correspondance de la figure 3 (signe "+").

En outre, une requête entrante ne peut pas être satisfaite si la table de correspondance (figure 3) comporte au moins une case décrivant une combinaison logique dans laquelle la ressource de chaque couple est indisponible selon la table de disponibilité (figure 4). Tel est le cas en l'espèce dans l'exemple représenté sur la figure 4, dans les cases (d2,X) et (d2,Y) de la table de disponibilité faisant apparaître les ressources X et Y comme indisponibles, toutes deux, alors qu'elles sont essentielles l'une ou l'autre selon les cases homologues du tableau de correspondance de la figure 3 (flèche horizontale entre les cases (t2,X) et (t2,Y)).

En l'espèce, dans l'exemple représenté, une requête entrante associée à la table de correspondance de la figure 3 ne peut être satisfaite avec la table de disponibilité de la figure 4, pour une date définie notamment par les plages d1 et d2. Dans ce cas, il est transmis un message d'indisponibilité avec, par exemple, une invitation à formuler une nouvelle requête spécifiant une date différente (flèche n en sortie du test E57).

A l'inverse, si une requête entrante a pu être satisfaite (flèche o en sortie du test E57), la préemption d'une date de rendez-vous est décidée et les données de disponibilités temporelles associées aux ressources requises pour le rendez-vous sont mises à jour dans le fichier AGENDA (retour à l'étape E56), en faisant passer, le cas échéant, une plage temporelle d'un état « libre » à un état « préempté ».

Ces différentes étapes peuvent être menées par l'exécution d'un programme d'ordinateur. Ainsi, la présente invention vise aussi un produit programme d'ordinateur capable notamment d'interpréter le contenu d'une table de correspondance, ou encore comparer le contenu d'une table de disponibilité (c'est-à-dire le fichier AGENDA) et celui d'une table de correspondance, et, plus généralement, comportant des instructions pour la mise en oeuvre du procédé au sens de l'invention ci-avant.

Ce programme d'ordinateur peut être stocké dans une mémoire de l'unité centrale UC du dispositif informatique 1, ou stocké sur un support mémoire (par exemple un CD-ROM, ou autre) destiné à coopérer avec un lecteur de l'unité centrale (par exemple le lecteur LEC), ou encore dans un format téléchargeable via un réseau de télécommunication.

Bien entendu, la présente invention ne se limite pas à la forme de réalisation décrite ci-avant à titre d'exemple ; elle s'étend à d'autres variantes.

Dans une variante de réalisation, il peut être prévu d'évaluer directement des dates de disponibilité en vérifiant une coïncidence des disponibilités de la table de la figure 4 avec l'essentialité des ressources requises selon la table de correspondance de la figure 3 et proposer alors quelques dates de rendez-vous à une personne formulant le souhait d'un service donné dans une requête entrante.

Par ailleurs, d'autres fonctionnalités du serveur au sens de l'invention, décrites notamment dans FR-2 851 834, peuvent être prévues (identification et/ou authentification des personnes aptes à formuler une requête entrante, paramétrage des droits d'accès associés à ces personnes, gestion du profil de ces personnes (vérification des autorisations d'accès), synchronisation des requêtes et des données d'agenda par l'utilisation d'un outil du type syncML, ou autres).

**Revendications**

1. Procédé mis en oeuvre par des moyens informatiques, de gestion de requêtes de prises de rendez-vous pour des services requérrant des ressources parmi un ensemble fini de ressources, le procédé comportant les étapes de :

    - réception et interprétation d'une requête entrante,
    - identification :

        * d'une requête type correspondant à une requête entrante, parmi une pluralité de requêtes type prédéterminées,
        * et d'un jeu de ressources, parmi ledit ensemble fini de ressources, associé à la requête type correspondant à ladite requête entrante,

    - et décision, en fonction de données de disponibilités temporelles des ressources dudit jeu de ressources, de satisfaire ou non ladite requête entrante.

2. Procédé selon la revendication 1, dans lequel ladite requête entrante comporte :

    - des informations organisationnelles permettant d'identifier une requête type parmi les requêtes type prédéterminées, ces informations organisationnelles étant propres à des prestations à assurer au cours d'un rendez-vous requis,
    - et des informations temporelles relatives à une date et/ou un horaire de rendez-vous souhaités.

3. Procédé selon l'une des revendications 1 et 2, dans lequel une fonction booléenne est appliquée auxdites données de disponibilités temporelles des ressources et un résultat de l'application de ladite fonction booléenne détermine la décision de satisfaire ou non la requête entrante.

4. Procédé selon l'une des revendications précédentes, dans lequel :

    - on prévoit au moins un fichier agenda comportant les données de disponibilités temporelles des ressources,
    - en cas de satisfaction d'une requête entrante, on décide une préemption d'une date de rendez-vous et on met à jour les données de disponibilités temporelles associées aux ressources dudit jeu de ressources requises dans ledit fichier agenda, en faisant passer une plage temporelle correspondant sensiblement à la date de rendez-vous d'un état "libre" à un état "préempté".

5. Procédé selon la revendication 4, dans lequel les données de disponibilité d'une ressource matérielle indiquent un nombre d'exemplaires ($k$) de cette ressource matérielle, ledit nombre d'exemplaires étant décrémenté à chaque mise à jour faisant intervenir ladite ressource matérielle.

6. Procédé selon l'une des revendications précédentes, dans lequel sont associées à chaque requête type :

    - une pluralité d'opérations s'étendant chacune sur une ou plusieurs plages temporelles successives, d'une part, et,
    - au moins les ressources dudit jeu de ressources susceptibles de satisfaire la requête type, d'autre part.

7.  Procédé selon la revendication 6, dans lequel chaque requête type est définie par une table de correspondance, chaque case de la table de correspondance comportant :

    - une valeur d'essentialité d'une ressource sur une plage temporelle, ou
    - une valeur de non-essentialité d'une ressource sur une plage temporelle, ou
    - une valeur résultant d'une combinaison logique relative à une interchangeabilité de plusieurs ressources sur une même plage temporelle et/ou relative à une interchangeabilité de plusieurs plages temporelles pour une même ressource.

8.  Procédé selon la revendication 7, dans lequel la combinaison logique fait intervenir :

    - des couples comportant chacun une plage temporelle et une ressource,
    - un opérateur logique de type "ET" entre la plage temporelle et la ressource, dans chaque couple, et
    - un opérateur logique de type "OU" entre les couples.

9.  Procédé selon l'une des revendications 4 et 5, prises en combinaison avec l'une des revendications 7 et 8, dans lequel :

    - ledit fichier agenda est organisé en une succession de plages temporelles, d'une part, et en une succession de ressources de l'ensemble de ressources, d'autre part, pour former une table de disponibilité dont chaque case comporte une valeur d'état "libre" ou "préempté" d'une ressource sur une plage temporelle,
    - on compare les cases de la table de correspondance aux cases de la table de disponibilité, une à une pour une même ressource et une même plage temporelle, et
    - on décide de ne pas satisfaire une requête entrante au moins :

        • si une ressource comporte une valeur d'essentialité dans la table de correspondance et une valeur d'indisponibilité dans la table de disponibilité,
        • et/ou si ladite table de correspondance comporte au moins une case comportant une combinaison logique dans laquelle la ressource de chaque couple est indisponible.

10. Procédé selon l'une des revendications précédentes, comportant une étape de construction et/ou de mise à jour des requêtes type prédéterminées, en renseignant chacune desdites requêtes type prédéterminées en fonction d'informations organisationnelles propres à des prestations à assurer pour satisfaire la requête type.

11. Dispositif informatique de gestion de requêtes de prises de rendez-vous pour des services requérant des ressources parmi un ensemble fini de ressources, le dispositif comportant :

    - une interface propre à recevoir et interpréter une requête entrante,
    - un moteur de recherche pour identifier :

        - une requête type correspondant à une requête entrante, parmi une pluralité de requêtes type prédéterminées,
        - et un jeu de ressources associé à la requête type correspondant à ladite requête entrante,

    - une mémoire de stockage de données de disponibilités temporelles des ressources, et
    - un module de décision propre à coopérer avec ladite mémoire de stockage pour décider, en fonction des données de disponibilité des ressources dudit jeu de ressources, de satisfaire ou non ladite requête entrante.

12. Dispositif selon la revendication 11, comportant en outre des moyens pour la mise en oeuvre du procédé selon l'une des revendications 2 à 9.

13. Dispositif informatique pour la mise en oeuvre du procédé selon la revendication 10, comportant :

    - un moteur de construction des requêtes type,
    - une interface homme-machine pour construire et/ou mettre à jour lesdites requêtes type prédéterminées en entrant des informations organisationnelles propres à chaque requête type,
    - et une mémoire propre à stocker lesdites requêtes type prédéterminées.

14. Produit programme d'ordinateur téléchargeable via un réseau de télécommunication et/ou stocké dans une mémoire d'une unité centrale et/ou stocké sur un support mémoire destiné à coopérer avec un lecteur de ladite unité centrale, comportant des instructions pour la mise en oeuvre du procédé selon l'une des revendications 1 à 10.

**FIG. 1**

**FIG. 2**

**FIG. 3**

| | X | Y | Z | P | |
|---|---|---|---|---|---|
| OP1→ t1 | ↔ | ↔ | ↕ | + | |
| OP2 { t2 | ↔ | | ↕ | + | |
| t3 | ↔ | | ↕ | + | OP7 |
| OP3→ t4 | ↔ | | ↕ | + | |
| OP4→ t5 | + | ╱ | ╱ | ╱ | |
| OP5→ t6 | ↔ | | ↕ | ╱ | |
| OP6→ t7 | ↔ | ↔ | ↕ | ╱ | ←OP8 |

**FIG. 4**

| | X | Y | Z | P | T | U |
|---|---|---|---|---|---|---|
| ... | ... | ... | ... | ... | ... | ... |
| d1 | O | N | N | N | N | N |
| d2 | N | N | O | N | O | O |
| ... | ... | ... | ... | ... | ... | ... |
| d7 | O | O | O | k | N | O |
| ... | ... | ... | ... | ... | ... | ... |

**FIG. 5**

**Office européen
des brevets**

**RAPPORT DE RECHERCHE EUROPEENNE**

Numéro de la demande

EP 06 29 1999

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2005/004815 A1 (MACHTELINCK GEERT) 6 janvier 2005 (2005-01-06) * abrégé * * page 1, alinéa 19 * * page 2, alinéa 26 * * page 4, alinéa 85 * * page 7, alinéas 110,112 * ----- | 1-13 | INV. G06Q10/00 |
| X | US 2003/005055 A1 (RALSTON STEPHEN M ET AL) 2 janvier 2003 (2003-01-02) * abrégé * * page 1, alinéas 2,13 * * page 2, alinéa 26 - page 3, alinéa 37 * ----- | 1-13 | |
| X | GB 2 390 191 A (YI * TANG) 31 décembre 2003 (2003-12-31) * abrégé * * page 1, alinéas 1,2 * * page 10, alinéa 43 - alinéa 44 * * page 16, alinéa 67 * ----- | 1-13 | |
| A | WO 02/101622 A (AVENTIS HOLDINGS INC; NUDD, AUDREY, J; ARGENBRIGHT, KEITH, E; GALBRAIT) 19 décembre 2002 (2002-12-19) * abrégé * * page 2, ligne 18 - ligne 28 * * page 6, ligne 14 - ligne 28 * * page 11, ligne 9 - ligne 21 * ----- | 1 | DOMAINES TECHNIQUES RECHERCHES (IPC) G06Q |

Le présent rapport a été établi pour toutes les revendications

| Lieu de la recherche | Date d'achèvement de la recherche | Examinateur |
|---|---|---|
| La Haye | 3 avril 2007 | Rossier, Thomas |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
 
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 29 1999

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-04-2007

| Document brevet cité au rapport de recherche | | Date de publication | Membre(s) de la famille de brevet(s) | | Date de publication |
|---|---|---|---|---|---|
| US 2005004815 | A1 | 06-01-2005 | CN<br>WO | 1826611 A<br>2005004013 A1 | 30-08-2006<br>13-01-2005 |
| US 2003005055 | A1 | 02-01-2003 | AU<br>EP<br>WO<br>US | 5132500 A<br>1183621 A2<br>0070488 A2<br>6389454 B1 | 05-12-2000<br>06-03-2002<br>23-11-2000<br>14-05-2002 |
| GB 2390191 | A | 31-12-2003 | CA | 2429171 A1 | 27-12-2003 |
| WO 02101622 | A | 19-12-2002 | CA | 2456409 A1 | 19-12-2002 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- FR 2851834